# EUROPÄISCHE PATENTSCHRIFT

(11) **EP 2 770 382 B1**
(45) Veröffentlichungstag und Bekanntmachung des Hinweises auf die Patenterteilung: **23.10.2019**
(21) Anmeldenummer: 13000846.9
(22) Anmeldetag: 20.02.2013
(51) Int. Cl.: G05B 19/042

(54) **Verfahren zur Inbetriebnahme eines Automatisierungssystems**
Method for commissioning an automation system
Procédé de mise en service d'un système d'automatisation

(43) Veröffentlichungstag der Anmeldung: 27.08.2014
(73) Patentinhaber: FESTO AG & Co. KG, 73734 Esslingen (DE)
(72) Erfinder: Fuss, Martin, 73240 Wendlingen (DE); Stauß, Thomas, 70597 Stuttgart (DE); Schöttner, Michael, 73240 Wendlingen (DE)
(74) Vertreter: Patentanwälte Magenbauer & Kollegen Partnerschaft mbB

(56) Entgegenhaltungen:
- EP-A1- 2 068 214
- EP-A2- 1 199 618
- US-B1- 6 854 111

## Beschreibung

Die Erfindung betrifft ein Verfahren zur Inbetriebnahme eines Automatisierungssystems, das wenigstens einen Aktor zur Bereitstellung einer Bewegung sowie wenigstens eine Aktorsteuerung zur Ansteuerung des Aktors umfasst.

Bei einem der Anmelderin bekannten, druckschriftlich nicht niedergelegten Verfahren zur Inbetriebnahme eines Automatisierungssystems, beispielsweise eines pneumatischen Handhabungssystems zur Förderung von Bauteilen in einem industriellen Herstellungsprozess, erfolgt zunächst anhand der gegebenen Randbedingungen eine Definition einer Bewegungsaufgabe. Die Bewegungsaufgabe beinhaltet beispielsweise Angaben über eine Förderstrecke, über das Gewicht der zu fördernden Bauteile, über die Taktzeit, innerhalb derer der Fördervorgang ablaufen soll, sowie möglicherweise weitere Angaben. Nach der Definition der Bewegungsaufgabe kann mit Hilfe einer Komponentendatenbank eine Auswahl von geeigneten Komponenten für ein Automatisierungssystem vorgenommen werden. In einem anschließenden Schritt kann mit Hilfe eines Simulationsprogramms überprüft werden, ob die ausgewählten Komponenten geeignet sind, die gestellte Bewegungsaufgabe zu erfüllen. Sofern diese Überprüfung positiv abgeschlossen werden konnte, erfolgt eine Bestellung der ausgewählten Komponenten beim Komponentenlieferanten und nach Anlieferung der Komponenten der physikalische Aufbau des Automatisierungssystems. Sobald die Komponenten zumindest im Wesentlichen zu dem geplanten Automatisierungssystem zusammengefügt wurden, ist eine Parametrierung einer Aktorsteuerung erforderlich, die dazu vorgesehen ist, den wenigstens einen Aktor des Automatisierungssystems anzusteuern und somit die gewünschte Bewegung des Aktors zu bewirken. Diese Parametrierung kann beispielsweise mittels einer Parametrierungssoftware erfolgen, an die Angaben über das verwendete Automatisierungssystem sowie über die vorgesehene Bewegungsaufgabe bereitgestellt werden und mit deren Hilfe die notwendigen Parameter zum Betrieb der Aktorsteuerung ermittelt werden. Diese ermittelten Parameter werden dann auf die Aktorsteuerung übertragen und können dann für den Betrieb des Automatisierungssystems eingesetzt werden.

Die Aufgabe der Erfindung besteht darin, ein Verfahren zur Inbetriebnahme eines Automatisierungssystems anzugeben, das eine gegenüber der bekannten Vorgehensweise vereinfachte Inbetriebnahme ermöglicht.

Diese Aufgabe wird durch ein Verfahren der eingangs genannten Art mit den Merkmalen des Anspruchs 1 gelöst.

Hierbei sind die folgenden Verfahrensschritte vorgesehen:
Bereitstellen einer von dem Automatisierungssystem zu erfüllenden Bewegungsaufgabe an eine Komponentendatenbank,
virtuelles Auswählen wenigstens eines Aktors und wenigstens einer Aktorsteuerung als Komponenten des zur Lösung der Bewegungsaufgabe vorgesehenen Automatisierungssystems aus der Komponentendatenbank,
Bereitstellen eines ersten Datenpakets, das Komponentendaten der ausgewählten Komponenten sowie die Bewegungsaufgabe umfasst, an ein Parametrierungsprogramm,
virtuelles Parametrieren des ausgewählten Automatisierungssystems zur Lösung der Bewegungsaufgabe mit dem Parametrierungsprogramm und Speichern von ermittelten Parametern, vorzugsweise zusammen mit Komponentendaten der ausgewählten Komponenten und/oder mit der Bewegungsaufgabe, in einem zweiten Datenpaket in einer Parameterdatenbank,
Durchführen einer Zuordnung einer eindeutigen Kennung einer Komponente des ausgewählten Automatisierungssystems zu dem zweiten Datenpaket und Speicherung des um die wenigstens eine eindeutige Kennung ergänzten zweiten Datenpakets in der Parameterdatenbank,
Eingeben der wenigstens einen eindeutigen Kennung einer Komponente des ausgewählten Automatisierungssystems in die Parameterdatenbank nach Durchführung des physikalischen Aufbaus des Automatisierungssystems und
Übertragen des anhand der Kennung der wenigstens einen Komponente ausgewählten zweiten Datenpakets von der Parameterdatenbank in das physikalisch aus den ausgewählten Komponenten aufgebaute Automatisierungssystem zur Durchführung der vorgegebenen Bewegungsaufgabe.

Durch die Bereitstellung der Bewegungsaufgabe an die Komponentendatenbank können beispielsweise über ein Ausschlussverfahren diejenigen Komponenten ausgeschlossen werden, die aufgrund ihrer Eigenschaften nicht geeignet sind, die gestellte Bewegungsaufgabe zu erfüllen. Beispielsweise können Komponenten ausgeschlossen werden, die einen zu geringen Hub oder eine zu geringe Belastbarkeit aufweisen oder die erheblich zu groß dimensioniert sind, um die Bewegungsaufgabe sinnvoll zu erfüllen. Ferner kann anschließend ausgehend von der Bewegungsaufgabe mit Hilfe der Komponentendatenbank eine Komponentenauswahl vorgenommen werden, wobei beispielsweise besonders geeignete Komponenten in einer Empfehlungsliste angegeben werden können. Die ausgewählten Komponenten, bei denen es sich auch um Komponentengruppen handeln kann, sofern für die Bewegungsaufgabe mehrere unterschiedliche Komponenten in Frage kommen, werden anhand von eindeutigen Identifikationsmerkmalen, insbesondere Bestellnummern, zusammen mit der Bewegungsaufgabe in einem ersten Datenpaket gespeichert, das von der Komponentendatenbank erzeugt wird. Bei der Auswahl von Komponenten kann beispielsweise auch berücksichtigt werden, dass ein aus mehreren Komponenten aufgebautes und bereits bestehendes Automatisierungssystem ergänzt oder aktualisiert werden soll. In diesem Fall werden die bereits vorhandenen Komponenten zusammen mit der Bewegungsaufgabe in die Komponentendatenbank eingegeben, so dass zumindest einige Auswahlschritte in der Komponentendatenbank aufgrund der Komponentenvorgabe entfallen können. Die Identifikationsmerkmale der bereits vorhandenen Komponenten können ebenfalls im ersten Datenpaket gespeichert werden.

Das erste Datenpaket wird anschließend an ein Parametrierungsprogramm zur Verfügung gestellt, mit dessen Hilfe eine Parametrierung des zu diesem Zeitpunkt rein virtuell existierenden Automatisierungssystems vorgenommen werden kann. Das Parametrierungsprogramm kann anhand der im ersten Datenpaket zur Verfügung gestellten Informationen vorzugsweise unmittelbar einen Parametersatz ermitteln, sofern im ersten Datenpaket eine eindeutige Komponentenauswahl vorgenommen wurde und keine zusätzlichen Einstellungen gewünscht und/oder erforderlich sind.

Sofern das erste Datenpaket eine Komponentengruppe oder mehrere Komponentengruppen umfasst, kann mit Hilfe des Parametrierungsprogramms zunächst eine weitere Eingrenzung der vorher getroffenen Komponentenauswahl auf die geeignetsten Komponenten vorgenommen werden. Anschließend erfolgt anhand einer endgültigen Komponentenauswahl und gegebenenfalls unter Einbeziehung von weiteren auf den Parametrierungsvorgang bezogenen Vorgaben eine abschließende Erstellung eines geeigneten Parametersatzes. Die ermittelten Parameter werden anschließend in einem zweiten Datenpaket gespeichert. Dabei kann vorgesehen sein, dass in das zweite Datenpaket auch die Komponentendaten der ausgewählten Komponenten und/oder die Bewegungsaufgabe gespeichert werden. Eine Speicherung der ausgewählten Komponenten in das zweite Datenpaket ist insbesondere dann von Interesse, wenn eine endgültige Komponentenauswahl erst mit Hilfe des Parametrierungsprogramms getroffen wurde.

Anhand der im zweiten Datenpaket gespeicherten Komponenteninformationen kann anschließend eine Zusammenstellung, beispielsweise eine Kommissionierung, der ausgewählten Komponenten aus einem Komponentenlager, vorgesehen werden. Zumindest wird davon ausgegangen, dass das neu zu erstellende oder zu ergänzende Automatisierungssystem wenigstens die Bereitstellung einer zusätzlichen Komponente erfordert, die aus dem Komponentenlager bereitgestellt wird.

Für die nachfolgende Durchführung einer Zuordnung einer eindeutigen Kennung einer Komponente des ausgewählten Automatisierungssystems zu dem zweiten Datenpaket und einer Speicherung des um die wenigstens eine eindeutige Kennung ergänzten zweiten Datenpakets in der Parameterdatenbank kann es beispielsweise vorgesehen werden, dass eine eindeutige Identifikation wenigstens einer Komponente, beispielsweise eine Kommunikationsadresse der Komponente, die für einen Datenaustausch in einem Kommunikationssystem wie einem Feldbussystem vorgesehen ist, ermittelt wird und der Zuordnung zugrundegelegt wird. Diese Identifikation wird dem zweiten Datenpaket hinzugefügt und dient bei dem nachfolgenden Abruf des zweiten Datenpakets nach Durchführung des physikalischen Aufbaus des Automatisierungssystems zur Ermittlung des für das Automatisierungssystem vorgesehenen zweiten Datenpakets.

Sobald das zweite Datenpaket anhand der Identifikation oder Kennung in der Parameterdatenbank aufgefunden wurde, kann es in das physikalisch aus den ausgewählten Komponenten aufgebaute Automatisierungssystem zur Durchführung der vorgegebenen Bewegungsaufgabe eingespeist werden. Somit stehen die am Anfang des Verfahrens gewonnenen Erkenntnisse, insbesondere die mit Hilfe des Parametrierungsprogramms erzeugten Parameter, unmittelbar für den Betrieb des Automatisierungssystems zur Verfügung. Hierdurch wird einerseits der Aufwand für die Inbetriebnahme des Automatisierungssystems gegenüber der aus dem Stand der Technik bekannten Vorgehensweise reduziert, andererseits werden Fehlerquellen minimiert, da die Datenpakete, die ab dem Zeitpunkt der Auswahl der Komponenten definiert werden, stets aufeinander aufbauen, wodurch die Gefahr von Fehleingaben durch einen Benutzer zumindest theoretisch vollständig ausgeschlossen wird.

Vorteilhafte Weiterbildungen der Erfindung sind Gegenstand der Unteransprüche.

Zweckmäßig ist es, wenn nach dem Schritt der Speicherung des um die wenigstens eine eindeutige Kennung ergänzten zweiten Datenpakets in der Parameterdatenbank der Schritt der Zusammenstellung von physikalischen Komponenten des Automatisierungssystems aus einem Lagersystem erfolgt. Das Verfahren ist insbesondere dann besonders effizient, wenn ein vollständiger Neuaufbau eines Automatisierungssystems erfolgen soll, bei dem sämtliche Komponenten aus einem oder aus mehreren Lagerstätten zu einem Gesamtauftrag zusammengeführt werden und dann an den Kunden ausgeliefert werden, der den physikalischen Aufbau des Automatisierungssystems vornimmt.

Vorteilhaft ist es, wenn nach dem Schritt der Zusammenstellung der physikalischen Komponenten des Automatisierungssystems der Schritt der Ermittlung der eindeutigen Kennung einer Komponente des ausgewählten Automatisierungssystems erfolgt. Hierzu kann insbesondere vorgesehen werden, eine Identifikation der wenigstens einen Komponente elektronisch auszulesen und/oder eine auf dem Gehäuse der Komponente angebrachte Identifikation abzutasten, beispielsweise mit einem optischen Scanner. Vorzugsweise ist vorgesehen, dass nach der Zusammenstellung oder Kommissionierung der Komponenten, insbesondere vor der Auslieferung der Komponenten, ein Abgleich der Identifikationen der jeweiligen Komponenten mit dem zweiten Datenpaket erfolgt, um eventuelle Abweichungen zu ermitteln und korrigieren zu können. Besonders bevorzugt werden eindeutige Identifikationen sämtlicher Komponenten des aufzubauenden Automatisierungssystems nach der Zusammenstellung und vor der Auslieferung dem zweiten Datenpaket zugeordnet und werden vor der Inbetriebnahme des physikalisch aufgebauten Automatisierungssystems zumindest teilweise automatisiert abgefragt, um sicherzustellen, dass in das Automatisierungssystem tatsächlich die korrekten Komponenten eingebaut wurden.

Bei einer Weiterbildung des Verfahrens ist vorgesehen, dass nach dem Schritt der Ermittlung der eindeutigen Kennung einer Komponente des ausgewählten Automatisierungssystems der Schritt des Aufbaus des Automatisierungssystems und der Schritt der Herstellung einer Datenverbindung des Automatisierungssystems mit der Parameterdatenbank erfolgt, wobei die Datenverbindung über ein Feldbussystem und eine übergeordnete Steuereinrichtung, insbesondere über eine Internetverbindung, hergestellt wird. Bei diesem Verfahrensschritt findet der Abruf des zweiten Datenpaketes aus der Parameterdatenbank anhand der eindeutigen Identifikation oder Kennung der wenigstens einen Komponente des Automatisierungssystems statt, wodurch sichergestellt wird, dass eine korrekte Zuordnung zwischen gespeichertem zweiten Datenpaket und physikalisch aufgebautem Automatisierungssystem vorgenommen wird. Um eine Datenverbindung zwischen der Aktorsteuerung und der Parameterdatenbank herzustellen, kann der Einsatz eines Feldbussystems und einer übergeordneten Steuereinrichtung, beispielsweise einer speicherprogrammierbaren Steuerung (SPS) vorgesehen sein, wobei die Datenverbindung beispielsweise über ein lokales Netzwerk oder über das Internet hergestellt wird. Ergänzend oder alternativ kann auch eine direkte Datenverbindung zwischen der Aktorsteuerung und einem Server, auf dem die Parameterdatenbank abgelegt ist, mittels einer drahtgebundenen oder drahtlosen Internetverbindung hergestellt werden.

In vorteilhafter Ausgestaltung des Verfahrens erfolgt nach dem Schritt der Herstellung einer Datenverbindung mit der Parameterdatenbank eine selbsttätige Übermittlung der wenigstens einen Kennung von dem Automatisierungssystem zur Parameterdatenbank und/oder eine selbsttätige Übermittlung des zweiten Datenpakets von der Parameterdatenbank an das Automatisierungssystem. Dabei kann vorgesehen sein, dass sich das Automatisierungssystem, insbesondere die Aktorsteuerung, bei Vorliegen einer Datenverbindung mit der Parameterdatenbank selbstständig bei der Parameterdatenbank mit seiner Kennung oder Identifikation anmeldet. Ergänzend oder alternativ kann vorgesehen sein, dass das Automatisierungssystem, insbesondere die Aktorsteuerung, das in der Parameterdatenbank hinterlegte zweite Datenpaket abruft und zur späteren Verwendung abspeichert. In beiden Fällen erfolgt die Übertragung der notwendigen Daten automatisiert und mit minimaler Fehlerwahrscheinlichkeit.

Bevorzugt wird nach einer Übermittlung des zweiten Datenpakets an das Automatisierungssystem eine Anpassung von Parametern aus dem zweiten Datenpaket mittels eines Programmiergeräts, das mit dem Automatisierungssystem verbunden ist, vorgenommen und eine aktualisierte Version des zweiten Datenpakets wird zurück an die Parameterdatenbank übertragen. Da es in der praktischen Anwendung des Automatisierungssystems notwendig werden kann, Anpassungen der virtuell ermittelten Parameter vorzunehmen, ist die Verwendung eines Programmiergeräts vorgesehen, mit dessen Hilfe Einfluss auf die im Automatisierungssystem abgespeicherten Daten aus dem zweiten Datenpaket genommen werden kann. Bei dem Programmiergerät kann es sich um einen Personalcomputer mit einem entsprechenden Programmierprogramm oder um ein spezifisch an die Programmierung von Automatisierungssystemen angepasstes Gerät handeln. Um sicherzustellen, dass die Veränderungen an den Parametern bei einem Ausfall des damit konfigurierten Automatisierungssystems nicht verloren gehen, können die geänderten Parameter in Form eines modifizierten zweiten Datenpakets an die Parameterdatenbank weitergeleitet werden, um dort gespeichert zu werden. Dabei kann vorgesehen werden, dass das ursprüngliche zweite Datenpaket durch das modifizierte zweite Datenpaket ersetzt wird oder dass das ursprüngliche zweite Datenpaket in einen inaktiven Status versetzt wird, aber gespeichert bleibt und auf Wunsch ebenso wie das modifizierte zweite Datenpaketwieder aus der Parameterdatenbank abgerufen werden kann.

Bei einer Weiterbildung des Verfahrens werden bei dem Schritt der Rückübertragung des aktualisierten Datenpakets an die Parameterdatenbank zusätzliche Daten, insbesondere eine Seriennummer und/oder ein Softwarestand, wenigstens einer Komponente des Automatisierungssystems an die Parameterdatenbank bereitgestellt. Dadurch wird erreicht, dass die einzelnen Komponenten des Automatisierungssystems möglichst umfassend in der Parameterdatenbank erfasst werden können, um das Automatisierungssystem bei Bedarf möglichst exakt reproduzieren zu können und/oder im Fehlerfall in einfacher Weise für einen Ersatz defekter Komponenten sorgen zu können.

Vorteilhaft ist es somit, wenn bei einem Ausfall einer Komponente des Automatisierungssystems ein Bestellauftrag für eine Ersatz-Komponente erzeugt und an eine Bestelldatenbank übertragen wird, der von den zu dieser Komponente in der Parameterdatenbank gespeicherten Daten bestimmt ist. Der Bestellauftrag ist somit darauf gerichtet, die zu ersetzende Komponente so exakt wie möglich zu beschreiben, um eine 1:1-Austauschbarkeit zwischen defekter Komponente und Ersatz-Komponente so weit wie möglich zu gewährleisten.

Zweckmäßig ist es, wenn die Ersatz-Komponente mittels des in der Bestelldatenbank gespeicherten Bestellauftrags vor dem Einsatz der Ersatz-Komponente im Automatisierungssystem konfiguriert wird. Hierzu kann es beispielsweise notwendig sein, eine Firmware und/oder andere veränderliche Programme oder andere Eigenschaften der Ersatz-Komponente so anzupassen, dass die Ersatz-Komponente möglichst ohne sonstige Einstellungs- und/oder Parametrierarbeiten in das Automatisierungssystem eingebaut werden kann. Wenn beispielsweise die Ersatz-Komponente bereits mit einer neueren Firmware ausgestattet ist, kann vorgesehen werden, diese Firmware durch eine ältere Firmware zu ersetzen, um mit möglichst geringem Aufwand eine einwandfreie Funktion der Ersatz-Komponente in dem bereits bestehenden Automatisierungssystem zu erreichen.

Bevorzugt wird die Ersatz-Komponente nach dem Einbau in das Automatisierungssystem anhand des zweiten Datenpakets, das insbesondere in der Parameterdatenbank gespeichert ist, konfiguriert. Hierbei können insbesondere diejenigen Einstellungen an die Ersatz-Komponente zur Verfügung gestellt werden, die nicht in den Bestellauftrag für die Ersatz-Komponente mit übernommen werden konnten.

Bei einer Weiterbildung des Verfahrens ist vorgesehen, dass nach dem Schritt der Übermittlung des zweiten Datenpakets von der Parameterdatenbank an das Automatisierungssystem ein Abgleich der im zweiten Datenpaket gespeicherten Komponenten mit den physikalisch im Automatisierungssystem vorhandenen Komponenten vorgenommen wird und bei Vorliegen einer Abweichung zwischen gespeicherten und physikalisch vorhandenen Komponenten eine Fehlermeldung erzeugt wird. Hierdurch wird zumindest für diejenigen Komponenten des Automatisierungssystems, die in einer Datenübertragungsverbindung mit der Aktorsteuerung stehen, eine Überprüfung hinsichtlich der korrekten Zusammenstellung des Automatisierungssystems ermöglicht, um Fehlfunktionen zu unterbinden.

In weiterer Ausgestaltung des Verfahrens ist vorgesehen, dass während des Betriebs des Automatisierungssystems die wenigstens eine Aktorsteuerung Diagnosedaten und/oder Signale von Sensoren der Komponenten empfängt und diese Diagnosedaten und/oder Sensorsignale zeitweilig oder fortlaufend an ein, insbesondere der Parameterdatenbank zugeordnetes, Überwachungsprogram überträgt, um eine Erkennung von Fehlfunktionen der Komponenten des Automatisierungssystems zu ermöglichen. Die ermittelten Diagnosedaten und/oder Sensorsignale werden als Istwerte mit Sollwerten verglichen, die in der Parameterdatenbank gespeichert sind. Bei Abweichungen zwischen Istwerten und Sollwerten, die vorgebbare Schwellwerte übersteigen, kann eine Störungsmeldung an ein, insbesondere mobiles, Benutzerendgerät versendet werden. Die Sollwerte können statisch sein oder in Anbetracht des Lebenszyklus des Automatisierungssystems und der Einsatzhäufigkeit und/oder Einsatzdauer der einzelnen Komponenten verändert werden. Ergänzend oder alternativ kann vorgesehen sein, die Istwerte der Komponenten mit Istwerten identischer Komponenten anderer Automatisierungssysteme zu verknüpfen, um beispielsweise Lebensdauerzyklen bestimmter Komponenten zu ermitteln und in die jeweiligen Sollwerte mit einfließen zu lassen.

In weiterer Ausgestaltung des Verfahrens wird bei Vorliegen einer Störungsmeldung für wenigstens eine Komponente des Automatisierungssystems ein Abruf der für diese Komponente in der Parameterdatenbank gespeicherten Daten vorgenommen und anhand der gespeicherten Daten wird eine Bedienungs- und/oder Reparatur- und/oder Montageanleitung für die jeweilige Komponente an das Benutzerendgerät bereitgestellt. Hierdurch kann ein Benutzer schnell und effizient Entscheidungen hinsichtlich der weiteren Nutzung oder Abschaltung des Automatisierungssystems treffen, bevor eine eventuell vorgesehene selbsttätige Notabschaltung des Automatisierungssystems erfolgt. Ferner kann der Benutzer schnell und effizient eine gegebenenfalls fällige Wartung oder einen Austausch einer Komponente durchführen, da ihm unmittelbar die hierzu notwendigen Informationen zur Verfügung gestellt werden können. Bevorzugt ist es vorgesehen, dass das virtuelle Auswählen und/oder das virtuelle Parametrieren wenigstens eines Aktors und wenigstens einer Aktorsteuerung als Komponenten des zur Lösung der Bewegungsaufgabe vorgesehenen Automatisierungssystems mittels eines Auswahlalgorithmus und/oder mittels eines Parametrierungsalgorithmus vorgenommen wird, die der Komponentendatenbank und/oder dem Parametrierungsprogramm zugeordnet sind. Hierdurch kann eine besonders rasche und zielführende Konfiguration des gewünschten Automatisierungssystems anhand der gestellten Bewegungsaufgabe erfolgen. Vorzugsweise ist vorgesehen, dass bei der virtuellen Auswahl der Komponenten ein oder mehrere Vorschläge für geeignete Automatisierungssysteme erzeugt werden, die einem Benutzer präsentiert werden, damit dieser die endgültige Auswahl für die gestellte Bewegungsaufgabe treffen kann. Ergänzend oder alternativ kann vorgesehen werden, dass nach einer automatisierten Auswahl der Komponenten auch bereits eine automatisierte Parametrierung stattfindet, so dass der Benutzer einen oder mehrere Vorschläge für bereits parametrierte Automatisierungssysteme erhält und somit besonders rasch den Auswahl- und Parametrierungsvorgang abschließen kann.

Ein vorteilhafter Verfahrensablauf ist in der Zeichnung dargestellt. Hierbei zeigt:
- Figur 1: eine Schrittabfolge für die Durchführung des erfindungsgemäßen Verfahrens und
- Figur 2: ein Automatisierungssystem für die Anwendung des erfindungsgemäßen Verfahrens.

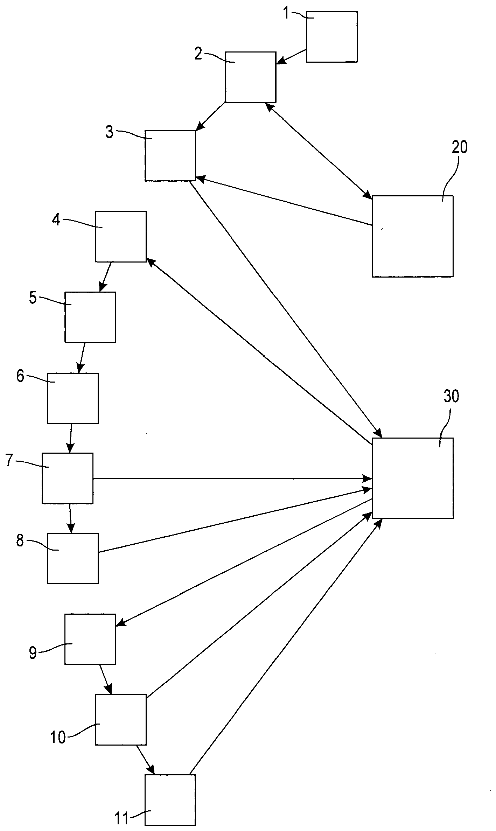

Die in der Figur 1 dargestellte Schrittabfolge für die Durchführung des erfindungsgemäßen Verfahrens ist rein exemplarisch und nicht als beschränkend anzusehen. In der Darstellung der Figur 1 sind sowohl zwingend erforderliche Schritte wie auch optionale Schritte umfasst, die nur gegebenenfalls verwendet werden.

Zunächst wird für die in der Figur 1 dargestellte Schrittabfolge im Schritt 1 eine Bewegungsaufgabe festgelegt. Dies erfolgt in der Regel durch Betrachtung von Eigenschaften wie dem maximalen Bewegungsweg, der maximal bereitzustellenden Bewegungskraft, der maximal bereitzustellenden Beschleunigung und/oder anderen Eigenschaften für den auszuwählenden Aktor.

Diese und gegebenenfalls weitere Eigenschaften werden im Schritt 2 als Bewegungsaufgabe gemäß einem vorgegebenen Eingabeschema, insbesondere mittels einer computergestützten Eingabemaske, elektronisch eingegeben und erfasst sowie an eine Komponentendatenbank 20 übermittelt. Anhand der Vorgaben aus der Bewegungsaufgabe kann, vorzugsweise computergestützt, eine manuelle oder zumindest teilweise automatisierte oder vollautomatische Auswahl derjenigen Bewegungskomponenten oder Gruppen von Bewegungskomponenten in der Komponentendatenbank erfolgen, die zur Lösung der Bewegungsaufgabe geeignet sind. Als Ergebnis der Bereitstellung der Bewegungsaufgabe an die Komponentendatenbank 20 erfolgt am Ende von Schritt 2 eine Übertragung und Darstellung von Informationen über die ausgewählten Komponenten von der Komponentendatenbank 20 an den Benutzer, so dass ein Benutzer eine endgültige Entscheidung über die ausgewählten Komponenten oder Komponentengruppen treffen kann. Die Informationen über die ausgewählten Komponenten oder Komponentengruppen werden auch als Komponentendaten bezeichnet und werden in einem ersten Datenpaket gespeichert, das vorzugsweise neben den Komponentendaten auch die Bewegungsaufgabe umfasst. Sofern die Bewegungsaufgabe nicht im ersten Datenpaket gespeichert wird, kann die Bewegungsaufgabe auch in direkter Weise für den Schritt 3 zur Verfügung gestellt werden.

Im Schritt 3 werden die Komponentendaten aus dem ersten Datenpaket und die Bewegungsaufgabe an ein Parametrierungsprogramm bereitgestellt. Dieses Parametrierungsprogramm ist vorzugsweise Bestandteil einer Parameterdatenbank 30 und dient dazu, das ausgewählte Automatisierungssystem virtuell auf manuellem oder zumindest teilweise automatischem Wege zu parametrieren, um möglichst alle Einstellungen für den oder die Aktoren und die wenigstens eine Aktorsteuerung zu bestimmen zu können. Die ermittelten Parameter werden, vorzugsweise zusammen mit der Bewegungsaufgabe und den Komponentendaten, in einem zweiten Datenpaket in der Parameterdatenbank 30 gespeichert.

Mit der Speicherung des zweiten Datenpakets in der Parameterdatenbank wird der nachfolgende Schritt 4 ausgelöst, der exemplarisch in der Kommissionierung der ausgewählten Komponenten aus einem Lagerbestand besteht. Hierzu kann beispielsweise anhand der Komponentendaten eine Stückliste erzeugt werden, die für die Zusammenstellung aller benötigten Komponenten eingesetzt wird.

Vor einer Auslieferung der Komponenten erfolgt im Schritt 5 eine Ermittlung wenigstens einer eindeutigen Kennung einer Komponente des ausgewählten Automatisierungssystems. Dieser Schritt kann beispielsweise im Rahmen einer Überprüfung der Vollständigkeit der tatsächlich vorliegenden Komponenten anhand der Stückliste vorgenommen werden. Vorzugsweise findet beim Schritt 5 ein Abgleich der erzeugten Stückliste mit den tatsächlich vorliegenden, aus dem Lagerbestand zusammengestellten Komponenten, statt. Hierbei kann beispielsweise vorgesehen sein, dass sämtliche Komponenten manuell oder automatisiert an einer Leseeinrichtung wie einem optischen Barcodescanner vorbeigeführt werden und hiermit eine Erfassung der jeweiligen Komponentendaten erfolgt. Dadurch kann am Ende des Kommissionierungsvorgangs verglichen werden, ob die bereitgestellten Komponenten den auf der Stückliste angeführten Komponenten entsprechen und sämtliche auf der Stückliste aufgezählten Komponenten tatsächlich auch vorliegen. Ferner kann hierbei die wenigstens Ermittlung einer eindeutigen Kennung wenigstens einer Komponente des ausgewählten Automatisierungssystems vorgenommen werden.

Die ermittelte Kennung ist beispielsweise als eindeutige Seriennummer und/oder als eindeutige Netzwerkadresse der Aktorsteuerung zugeordnet und wird im Schritt 6 dem zweiten Datenpaket zugeordnet und in der Parameterdatenbank 30 gespeichert.

Nach der Auslieferung der zusammengestellten Komponenten an einen Benutzer führt dieser als Schritt 7 den Aufbau des Automatisierungssystems mit Hilfe der bereitgestellten Komponenten durch. Im Rahmen des Aufbaus des Automatisierungssystems, insbesondere als Schritt 8, erfolgt ein Verbindungsaufbau zwischen dem Automatisierungssystem und der Parameterdatenbank 30. Hierbei kann je nach Ausgestaltung des Automatisierungssystems, insbesondere der Aktorsteuerung, vorgesehen sein, dass eine unmittelbare Datenübertragung zwischen dem Automatisierungssystem und der Parameterdatenbank 30 stattfindet, wobei zunächst die Kennung des Automatisierungssystems an die Parameterdatenbank 30 übertragen wird.

Exemplarisch kann für die Verbindung zwischen dem Automatisierungssystem und der Parameterdatenbank 30 auf ein kabelgebundenes Netzwerk oder auf eine drahtlose Mobilfunkverbindung zurückgegriffen werden. Alternativ kann vorgesehen sein, dass die wenigstens eine Komponente, insbesondere die Aktorsteuerung, über ein internes Kommunikationssystem wie beispielsweise ein Feldbussystem mit einer übergeordneten Steuerung, beispielsweise einer speicherprogrammierbaren Steuerung (SPS) kommuniziert, die ihrerseits mit einer Datenaustauscheinheit, insbesondere einem Webserver, ausgestattet ist, um über eine drahtgebundene oder zumindest teilweise drahtlose Datenverbindung mit der Parameterdatenbank 30 zu kommunizieren. Die Parameterdatenbank 30 ist vorzugsweise auf einem Datenserver mit Internetanbindung gespeichert. Durch die Übermittlung der wenigstens einen eindeutigen Kennung einer Komponente des ausgewählten Automatisierungssystems an die Parameterdatenbank kann in der Parameterdatenbank 30 eine Suche nach dem zugeordneten zweiten Datenpaket vorgenommen werden.

Sobald das zugeordnete zweite Datenpaket in der Parameterdatenbank 30 aufgefunden wurde, kann im Schritt 9 eine Übertragung der Inhalte des zweiten Datenpaketes oder des gesamten zweiten Datenpaketes an das Automatisierungssystem erfolgen. Durch diese Übermittlung werden zumindest diejenigen Parameter übertragen, die für eine Funktion des Automatisierungssystems erforderlich sind. Bevorzugt wird auch die Bewegungsaufgabe von der Parameterdatenbank 30 an das Automatisierungssystem mit übertragen, so dass nach erfolgter Übertragung des zweiten Datenpakets oder seiner Inhalte unmittelbar eine Inbetriebnahme des von der wenigstens einen Aktorsteuerung überwachten Automatisierungssystems erfolgen kann.

Vorzugsweise ist vorgesehen, dass die im Schritt 8 erfolgende Übermittlung der wenigstens einen Kennung vom Automatisierungssystem an die Parameterdatenbank 30 und/oder die im Schritt 9 erfolgende Übermittlung des zweiten Datenpakets von der Parameterdatenbank 30 an das Automatisierungssystem selbsttätig erfolgt. Hierzu sind das Automatisierungssystem, insbesondere die Aktorsteuerung und/oder die Parameterdatenbank 30 entsprechend eingerichtet, um ohne eine äußere Einflussnahme die notwendigen Daten zu übermitteln, um sicherzustellen, dass am ende des Schrittes 9 die Daten des zweiten Datenpaketes im Automatisierungssystem zur Verfügung stehen.

Anschließend kann in einem Schritt 10 eine Anpassung von Parametern aus dem zweiten Datenpaket mittels eines Programmiergeräts, das mit dem Automatisierungssystem verbunden ist, vorgenommen werden. Diese Parameteranpassung kann beispielsweise Änderungen an der Bewegungsaufgabe berücksichtigen, die nach dem Schritt 1 vorgenommen werden mussten. Ferner kann die Parameteranpassung auch darauf gerichtet sein, eine Feinabstimmung des Automatisierungssystems vorzunehmen. Vorzugsweise wird am Ende des Schrittes 10 eine aktualisierte Version des zweiten Datenpakets zurück an die Parameterdatenbank 30 übertragen.

Vorzugsweise ist es vorgesehen, bei dem Schritt der Rückübertragung des aktualisierten Datenpakets an die Parameterdatenbank 30 zusätzliche Daten, insbesondere eine Seriennummer und/oder ein Softwarestand, wenigstens einer Komponente des Automatisierungssystems an die Parameterdatenbank zur Verfügung zu stellen. Hierdurch kann die Spezifizierung des Automatisierungssystems in der Parameterdatenbank 30 verfeinert werden, um bei möglicherweise nachfolgenden Diagnose- oder Optimierungsschritten wirklichkeitsgetreue Daten zugrundelegen zu können.

Im Schritt 11, der in regelmäßigen oder unregelmäßigen Abständen wiederholt werden kann, ist es vorgesehen, während des Betriebs des Automatisierungssystems Diagnosedaten und/oder Signale von Sensoren der Komponenten in der wenigstens einen Aktorsteuerung zu empfangen und diese Diagnosedaten und/oder Sensorsignale zeitweilig oder fortlaufend an ein der Parameterdatenbank 30 zugeordnetes Überwachungsprogram zu übertragen, um eine Erkennung von Fehlfunktionen der Komponenten des Automatisierungssystems zu ermöglichen.

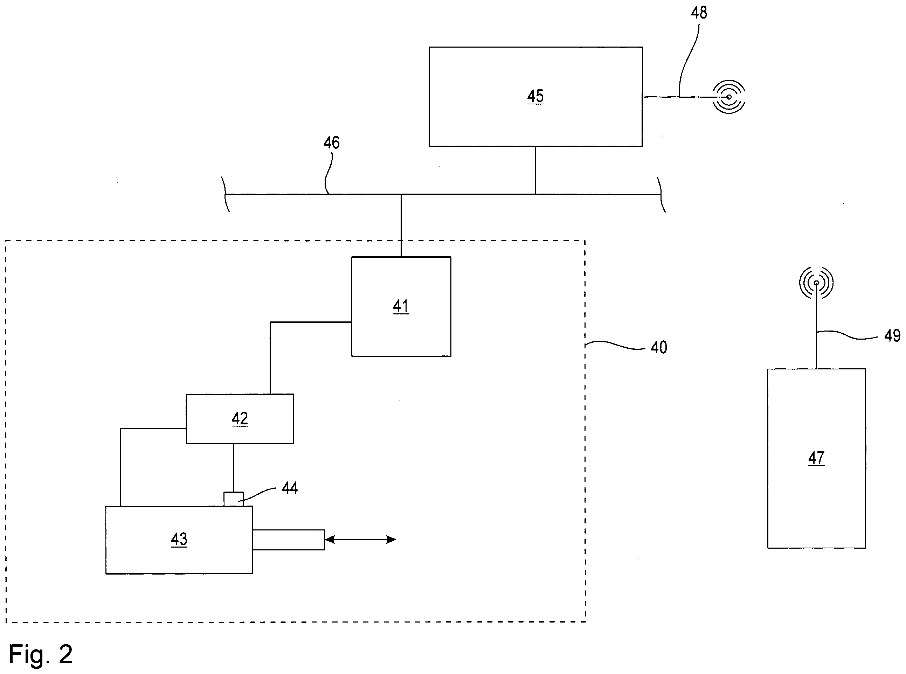

Das in der Figur 2 dargestellte Automatisierungssystem 40 umfasst exemplarisch eine Aktorsteuerung 41, einen Motorcontroller 42, einen Linearmotor 43 und einen am Linearmotor 43 angebrachten Positionssensor 44. Die Aktorsteuerung 41 ist zur Bereitstellung von Steuersignalen an den Motorcontroller 42 in Abhängigkeit von Steuerbefehlen, die von einer übergeordneten Steuereinrichtung 45 bereitgestellt werden, eingerichtet. Ferner ist die Aktorsteuerung 41 für eine Übertragung von Positionssignalen des Positionssensors 44 an die übergeordnete Steuereinrichtung 45 ausgebildet. Der Motorcontroller 42 dient zur Bereitstellung elektrischer Energie an den Linearmotor 43, damit dieser die gewünschten Bewegungen entsprechend den Steuerbefehlen der übergeordneten Steuereinrichtung 45 durchführen kann. Zur Überwachung des Linearmotors 43 dient der Positionssensor 44, der ein Positionssignal an den Motorcontroller 42 bereitstellt. Dieses Positionssignal kann insbesondere für eine Lageregelung des Linearmotors 43 eingesetzt werden.

Exemplarisch ist vorgesehen, dass die Aktorsteuerung 31 über ein drahtgebundenes Bussystem 46 mit der übergeordneten Steuereinrichtung 45 kommuniziert. Bei diesem Bussystem 46 handelt es sich beispielsweise um ein Feldbussystem.

Für eine Inbetriebnahme des Automatisierungssystems 40 ist es vorgesehen, eine Datenverbindung zwischen der Aktorsteuerung 40 und einem Internetserver 47 aufzubauen. Hierzu ist exemplarisch vorgesehen, eine in der Steuereinrichtung 45 angeordnete Funkeinrichtung 48, mit der ein drahtloser Zugang in ein Computernetzwerk, insbesondere in das Internet, hergestellt werden kann, zu nutzen, um Daten mit dem Internetserver 47 auszutauschen, der exemplarisch ebenfalls mit einer Funkeinrichtung 49 versehen ist und der die Parameterdatenbank enthält. Über die Datenverbindung können insbesondere die Kennung der Aktorsteuerung 41 an den Internetserver 47 und auf dem Internetserver 47 in einer Parameterdatenbank gespeicherte Parameter an die Aktorsteuerung 41 ausgetauscht werden.

## Patentansprüche

1. Verfahren zur Inbetriebnahme eines Automatisierungssystems (40), das wenigstens einen Aktor (43) zur Bereitstellung einer Bewegung sowie wenigstens eine Aktorsteuerung (41) zur Ansteuerung des Aktors (43) umfasst, mit den Schritten: Bereitstellen einer von dem Automatisierungssystem (40) zu erfüllenden Bewegungsaufgabe an eine Komponentendatenbank (20), virtuelles Auswählen wenigstens eines Aktors (43) und wenigstens einer Aktorsteuerung (41) als Komponenten des zur Lösung der Bewegungsaufgabe vorgesehenen Automatisierungssystems (40) aus der Komponentendatenbank (20), Bereitstellen eines ersten Datenpakets, das Komponentendaten der ausgewählten Komponenten sowie die Bewegungsaufgabe umfasst, an ein Parametrierungsprogramm (30), virtuelles Parametrieren des ausgewählten Automatisierungssystems (40) zur Lösung der Bewegungsaufgabe mit dem Parametrierungsprogramm (30) und Speichern von ermittelten Parametern, vorzugsweise zusammen mit Komponentendaten der ausgewählten Komponenten und/oder mit der Bewegungsaufgabe, in einem zweiten Datenpaket in einer Parameterdatenbank (30), Durchführen einer Zuordnung einer eindeutigen Kennung einer Komponente des ausgewählten Automatisierungssystems (40) zu dem zweiten Datenpaket und Speicherung des um die wenigstens eine eindeutige Kennung ergänzten zweiten Datenpakets in der Parameterdatenbank (30), Eingeben der wenigstens einen eindeutigen Kennung einer Komponente des ausgewählten Automatisierungssystems (40) in die Parameterdatenbank (30) nach Durchführung des physikalischen Aufbaus des Automatisierungssystems (40) und Übertragen des anhand der Kennung der wenigstens einen Komponente ausgewählten zweiten Datenpakets von der Parameterdatenbank (30) in das physikalisch aus den ausgewählten Komponenten aufgebaute Automatisierungssystem (40) zur Durchführung der vorgegebenen Bewegungsaufgabe, **dadurch gekennzeichnet, dass** das virtuelle Auswählen wenigstens eines Aktors und wenigstens einer Aktorsteuerung (41) als Komponenten des zur Lösung der Bewegungsaufgabe vorgesehenen Automatisierungssystems (40) mittels eines Auswahlalgorithmus vorgenommen wird, der der Komponentendatenbank (20) zugeordnet ist.

2. Verfahren nach Anspruch 1, **dadurch gekennzeichnet, dass** nach dem Schritt der Speicherung des um die wenigstens eine eindeutige Kennung ergänzten zweiten Datenpakets in der Parameterdatenbank (30) der Schritt der Zusammenstellung von physikalischen Komponenten des Automatisierungssystems (40) aus einem Lagersystem erfolgt.

3. Verfahren nach Anspruch 2, **dadurch gekennzeichnet, dass** nach dem Schritt der Zusammenstellung der physikalischen Komponenten des Automatisierungssystems (40) der Schritt der Ermittlung der eindeutigen Kennung einer Komponente des ausgewählten Automatisierungssystems (40) erfolgt.

4. Verfahren nach Anspruch 3, **dadurch gekennzeichnet, dass** nach dem Schritt der Ermittlung der eindeutigen Kennung einer Komponente des ausgewählten Automatisierungssystems (40) der Schritt des Aufbaus des Automatisierungssystems (40) und der Schritt der Herstellung einer Datenverbindung des Automatisierungssystems (40) mit der Parameterdatenbank (30) erfolgt, wobei die Datenverbindung vorzugsweise über ein Feldbussystem (46) und eine übergeordnete Steuereinrichtung (45), insbesondere über eine Internetverbindung, hergestellt wird.

5. Verfahren nach Anspruch 4, **dadurch gekennzeichnet, dass** nach dem Schritt der Herstellung einer Datenverbindung mit der Parameterdatenbank (30) eine selbsttätige Übermittlung der wenigstens einen Kennung von dem Automatisierungssystem (40) zur Parameterdatenbank (30) und/oder eine selbsttätige Übermittlung des zweiten Datenpakets von der Parameterdatenbank (30) an das Automatisierungssystem (40) erfolgt.

6. Verfahren nach einem der vorhergehenden Ansprüche, **dadurch gekennzeichnet, dass** nach einer Übermittlung des zweiten Datenpakets an das Automatisierungssystem (40) eine Anpassung von Parametern aus dem zweiten Datenpaket mittels eines Programmiergeräts, das mit dem Automatisierungssystem (40) verbunden ist, vorgenommen wird und eine aktualisierte Version des zweiten Datenpakets zurück an die Parameterdatenbank (30) übertragen wird.

7. Verfahren nach Anspruch 6, **dadurch gekennzeichnet, dass** bei dem Schritt der Rückübertragung des aktualisierten Datenpakets an die Parameterdatenbank (30) zusätzliche Daten, insbesondere eine Seriennummer und/oder ein Softwarestand, wenigstens einer Komponente des Automatisierungssystems (40) an die Parameterdatenbank (30) bereitgestellt werden.

8. Verfahren nach Anspruch 7, **dadurch gekennzeichnet, dass** bei einem Ausfall einer Komponente des Automatisierungssystems (40) ein Bestellauftrag für eine Ersatz-Komponente erzeugt und an eine Bestelldatenbank übertragen wird, der von den zu dieser Komponente in der Parameterdatenbank (30) gespeicherten Daten bestimmt ist.

9. Verfahren nach Anspruch 8, **dadurch gekennzeichnet, dass** die Ersatz-Komponente mittels des in der Bestelldatenbank gespeicherten Bestellauftrags vor dem Einsatz der Ersatz-Komponente im Automatisierungssystem (40) konfiguriert wird.

10. Verfahren nach Anspruch 8, **dadurch gekennzeichnet, dass** die Ersatz-Komponente nach dem Einbau in das Automatisierungssystem (40) anhand des zweiten Datenpakets, das insbesondere in der Parameterdatenbank (30) gespeichert ist, konfiguriert wird.

11. Verfahren nach einem der vorhergehenden Ansprüche, **dadurch gekennzeichnet, dass** nach dem Schritt der Übermittlung des zweiten Datenpakets von der Parameterdatenbank (30) an das Automatisierungssystem (40) ein Abgleich der im zweiten Datenpaket gespeicherten Komponenten mit den physikalisch im Automatisierungssystem (40) vorhandenen Komponenten vorgenommen wird und bei Vorliegen einer Abweichung zwischen gespeicherten und physikalisch vorhandenen Komponenten eine Fehlermeldung erzeugt wird.

12. Verfahren nach einem der vorhergehenden Ansprüche, **dadurch gekennzeichnet, dass** während des Betriebs des Automatisierungssystems (40) die wenigstens eine Aktorsteuerung (41) Diagnosedaten und /oder Signale von Sensoren der Komponenten empfängt und diese Diagnosedaten und/oder Sensorsignale zeitweilig oder fortlaufend an ein, insbesondere der Parameterdatenbank (30) zugeordnetes, Überwachungsprogram überträgt, um eine Erkennung von Fehlfunktionen der Komponenten des Automatisierungssystems (40) zu ermöglichen.

13. Verfahren nach Anspruch 12, **dadurch gekennzeichnet, dass** das Überwachungsprogramm bei Vorliegen von Abweichungen zwischen bereitgestellten Istwerten von Diagnosedaten und/oder Sensorsignalen der Komponenten und in der Parameterdatenbank (30) gespeicherten Sollwerten von Diagnosedaten und/oder Sensorsignalen, die vorgebbare Schwellwerte übersteigen, eine Störungsmeldung an ein, insbesondere mobiles, Benutzerendgerät versendet.

14. Verfahren nach Anspruch 13, **dadurch gekennzeichnet, dass** bei Vorliegen einer Störungsmeldung für wenigstens eine Komponente des Automatisierungssystems (40) ein Abruf der für diese Komponente in der Parameterdatenbank (30) gespeicherten Daten vorgenommen wird und dass anhand der gespeicherten Daten eine Bedienungs- und/oder Reparatur- und/oder Montageanleitung für die jeweilige Komponente an das Benutzerendgerät bereitgestellt wird.

15. Verfahren nach einem der vorhergehenden Ansprüche, **dadurch gekennzeichnet, dass** das virtuelle Parametrieren wenigstens eines Aktors und wenigstens einer Aktorsteuerung (41) als Komponenten des zur Lösung der Bewegungsaufgabe vorgesehenen Automatisierungssystems (40) mittels eines Parametrierungsalgorithmus vorgenommen wird, der der Parameterdatenbank (30) zugeordnet ist.

## Claims

1. Method for starting up an automation system (40) which comprises at least one actuator (43) for providing a movement and at least one actuator controller (41) for actuating the actuator (43), comprising the steps: providing a motion task to be performed by the automation system (40) to a component database (20), virtually selecting at least one actuator (43) and at least one actuator controller (41) as components of the automation system (40) provided for solving the motion task from the component database (20), providing a first data packet which comprises component data of the selected components and the motion task, to a parameterization program (30), virtually parameterizing the selected automation system (40) for solving the movement task with the parameterization program (30) and storing determined parameters, preferably together with component data of the selected components and/or with the movement task, in a second data packet in a parameter database (30), assignment of a unique identifier of a component of the selected automation system (40) to the second data packet and storing the second data packet supplemented by the at least one unique identifier in the parameter database (30), inputting the at least one unique identifier of a component of the selected automation system (40) into the parameter database (30) after the physical construction of the automation system (40) has been carried out and transferring the second data packet selected on the basis of the identifier of the at least one component from the parameter database (30) into the automation system (40) constructed physically from the selected components in order to carry out the predetermined motion task, **characterized in that** the virtual selection of at least one actuator and at least one actuator controller (41) as components of the automation system (40) provided for solving the motion task is performed by means of a selection algorithm which is assigned to the component database (20).

2. Method according to claim 1, **characterized in that**, after the step of storing the second data packet supplemented by the at least one unique identifier in the parameter database (30), the step of assembling physical components of the automation system (40) from a storage system takes place.

3. Method according to claim 2, **characterized in that**, after the step of assembling the physical components of the automation system (40), the step of determining the unique identification of a component of the selected automation system (40) takes place.

4. Method according to claim 3, **characterized in that**, after the step of determining the unique identification of a component of the selected automation system (40), the step of setting up the automation system (40) and the step of establishing a data connection of the automation system (40) with the parameter database (30) takes place, the data connection preferably being established via a fieldbus system (46) and a higher-level control device (45), in particular via an Internet connection.

5. Method according to claim 4, **characterized in that**, after the step of establishing a data connection with the parameter database (30), the at least one identifier is automatically transmitted from the automation system (40) to the parameter database (30) and/or the second data packet is automatically transmitted from the parameter database (30) to the automation system (40).

6. Method according to one of the preceding claims, **characterized in that** after transmission of the second data packet to the automation system (40), parameters from the second data packet are adapted by means of a programming device which is connected to the automation system (40) and an updated version of the second data packet is transmitted back to the parameter database (30).

7. Method according to claim 6, **characterized in that** in the step of returning the updated data packet to the parameter database (30), additional data, in particular a serial number and/or a software version, of at least one component of the automation system (40) are provided to the parameter database (30) .

8. Method according to claim 7, **characterized in that** in the event of a failure of a component of the automation system (40), an order for a replacement component is generated and transmitted to an order database which is determined by the data stored for this component in the parameter database (30) .

9. Method according to claim 8, **characterized in that** the replacement component is configured by means of the order stored in the order database before the replacement component is used in the automation system (40).

10. Method according to claim 8, **characterized in that** the replacement component is configured after installation in the automation system (40) on the basis of the second data packet, which is stored in particular in the parameter database (30).

11. Method according to one of the preceding claims, **characterized in that** after the step of transmitting the second data packet from the parameter database (30) to the automation system (40), the components stored in the second data packet are compared with the components physically present in the automation system (40) and an error message is generated if there is a deviation between stored and physically present components.

12. Method according to one of the preceding claims, **characterized in that** during operation of the automation system (40), the at least one actuator controller (41) receives diagnostic data and/or signals from sensors of the components and transmits these diagnostic data and/or sensor signals temporarily or continuously to a monitoring program, in particular assigned to the parameter database (30), in order to enable a detection of malfunctions of the components of the automation system (40).

13. Method according to claim 12, **characterized in that** in the presence of deviations between provided actual values of diagnostic data and/or sensor signals of the components and desired values of diagnostic data and/or sensor signals which are stored in the parameter database (30) and which exceed predeterminable threshold values, the monitoring program sends a fault message to a user terminal, in particular a mobile user terminal.

14. Method according to claim 13, **characterized in that** in the presence of a fault message for at least one component of the automation system (40), the data stored in the parameter database (30) for this component is called up, and **in that** operating and/or repair and/or assembly instructions for the respective component are provided to the user terminal on the basis of the stored data.

15. Method according to one of the preceding claims, **characterized in that** the virtual parameterization of at least one actuator and at least one actuator controller (41) is carried out as components of the automation system (40) provided for solving the motion task by means of a parameterization algorithm which is assigned to the parameter database (30).

## Revendications

1. Procédé servant à mettre en service un système d'automatisation (40), qui comprend au moins un actionneur (43) servant à fournir un déplacement ainsi qu'au moins une commande d'actionneur (41) servant à piloter l'actionneur (43), avec les étapes suivantes : de fourniture d'une tâche de déplacement à exécuter par le système d'automatisation (40) à une base de données de composant (20), de sélection virtuelle d'au moins un actionneur (43) et d'au moins une commande d'actionneur (41) en tant que composants du système d'automatisation (40) prévu pour apporter une solution à la tâche de déplacement parmi la base de données de composant (20), de fourniture d'un premier paquet de données, qui comprend des données de composant des composants sélectionnés ainsi que la tâche de déplacement, à un programme de paramétrage (30), de paramétrage virtuel du système d'automatisation (40) sélectionné pour apporter une solution à la tâche de déplacement avec le programme de paramétrage (30) et de mémorisation de paramètres déterminés, de préférence conjointement avec des données de composant des composants sélectionnés et/ou avec la tâche de déplacement, dans un deuxième paquet de données dans une base de données de paramètre (30), de mise en œuvre d'une attribution d'un code clair d'un composant du système d'automatisation (40) sélectionné au deuxième paquet de données et de mémorisation du deuxième paquet de données complété de l'au moins un code clair dans la base de données de paramètre (30), de saisie de l'au moins un code clair d'un composant du système d'automatisation (40) sélectionné dans la base de données de paramètre (30) après la mise en œuvre de la structure physique du système d'automatisation (40) et de transfert du deuxième paquet de données sélectionné à l'aide du code de l'au moins un composant de la base de données de paramètre (30) dans le système d'automatisation (40) élaboré physiquement à partir des composants sélectionnés pour mettre en œuvre la tâche de déplacement spécifiée, **caractérisé en ce que** la sélection virtuelle d'au moins un actionneur et d'au moins une commande d'actionneur (41) en tant que composants du système d'automatisation (40) prévu pour apporter une solution à la tâche de déplacement est réalisée au moyen d'un algorithme de sélection, qui est attribué à la base de données de composant (20).

2. Procédé selon la revendication 1, **caractérisé en ce qu'**après l'étape de la mémorisation du deuxième paquet de données complété de l'au moins un code clair dans la base de données de paramètre (30), l'étape de la compilation de composants physiques du système d'automatisation (40) est effectuée à partir d'un système d'entreposage.

3. Procédé selon la revendication 2, **caractérisé en ce qu'**après l'étape de la compilation des composants physiques du système d'automatisation (40), l'étape de la détermination du code clair d'un composant du système d'automatisation (40) sélectionné est effectuée.

4. Procédé selon la revendication 3, **caractérisé en ce qu'**après l'étape de la détermination du code clair d'un composant du système d'automatisation (40) sélectionné, l'étape de l'élaboration du système d'automatisation (40) et l'étape de l'établissement d'une connexion de données du système d'automatisation (40) avec la base de données de paramètre (30) sont effectuées, dans lequel la connexion de données est établie de préférence par l'intermédiaire d'un système de bus de champ (46) et d'un système de commande maître (45), en particulier par l'intermédiaire d'une connexion Internet.

5. Procédé selon la revendication 4, **caractérisé en ce qu'**après l'étape de l'élaboration d'une connexion de données avec la base de données de paramètre (30), une transmission autonome de l'au moins un code du système d'automatisation (40) à la base de données de paramètre (30) et/ou une transmission autonome du deuxième paquet de données de la base de données de paramètre (30) au système d'automatisation (40) sont effectuées.

6. Procédé selon l'une quelconque des revendications précédentes, **caractérisé en ce qu'**après une transmission du deuxième paquet de données au système d'automatisation (40), une adaptation de paramètres issus du deuxième paquet de données est réalisée au moyen d'un appareil de programmation, qui est relié au système d'automatisation (40), et une version mise à jour du deuxième paquet de données est transférée à nouveau à la base de données de paramètre (30).

7. Procédé selon la revendication 6, **caractérisé en ce que** lors de l'étape du retransfert du paquet de données mis à jour à la base de données de paramètre (30), des données supplémentaires, en particulier un numéro de série et/ou une version de logiciel, d'au moins un composant du système d'automatisation (40) sont fournies à la base de données de paramètre (30).

8. Procédé selon la revendication 7, **caractérisé en ce que** dans le cas d'une avarie d'un composant du système d'automatisation (40), un ordre de commande pour un composant de remplacement est généré et est transféré à une base de données de commande, qui est définie par les données mémorisées dans la base de données de paramètre (30) concernant ledit composant.

9. Procédé selon la revendication 8, **caractérisé en ce que** le composant de remplacement est configuré au moyen de l'ordre de commande mémorisé dans la base de données de commande avant l'emploi du composant de remplacement dans le système d'automatisation (40).

10. Procédé selon la revendication 8, **caractérisé en ce que** le composant de remplacement est configuré après le montage dans le système d'automatisation (40) à l'aide du deuxième paquet de données, qui est mémorisé en particulier dans la base de données de paramètre (30).

11. Procédé selon l'une quelconque des revendications précédentes, **caractérisé en ce qu'**après l'étape de la transmission du deuxième paquet de données par la base de données de paramètre (30) au système d'automatisation (40), une comparaison des composants mémorisés dans le deuxième paquet de données avec les composants présents physiquement dans le système d'automatisation (40) est réalisée et en présence d'un écart entre des composants mémorisés et des composants présents physiquement, une notification d'erreur est générée.

12. Procédé selon l'une quelconque des revendications précédentes, **caractérisé en ce que** pendant le fonctionnement du système d'automatisation (40), l'au moins une commande d'actionneur (41) reçoit des données de diagnostic et/ou des signaux de capteurs des composants et transfère lesdites données de diagnostic et/ou lesdits signaux de capteur temporairement ou en permanence à un programme de surveillance associé en particulier à la base de données de paramètre (30) pour permettre une identification de dysfonctionnements des composants du système d'automatisation (40).

13. Procédé selon la revendication 12, **caractérisé en ce que** le programme de surveillance envoie à un terminal utilisateur en particulier mobile, en présence d'écarts entre des valeurs réelles fournies de données de diagnostic et/ou de signaux de capteur des composants et des valeurs théoriques, mémorisées dans la base de données de paramètre (30), de données de diagnostic et/ou de signaux de capteur, qui dépassent des valeurs de seuil pouvant être spécifiées, une notification de dysfonctionnement.

14. Procédé selon la revendication 13, **caractérisé en ce qu'**en présence d'une notification de dysfonctionnement pour au moins un composant du système d'automatisation (40), une consultation des données mémorisées pour ledit composant dans la base de données de paramètre (30) est réalisée, et qu'à l'aide des données mémorisées, une instruction d'utilisation et/ou de réparation et/ou de montage pour le composant concerné est fournie au terminal utilisateur.

15. Procédé selon l'une quelconque des revendications précédentes, **caractérisé en ce que** le paramétrage virtuel d'au moins un actionneur et d'au moins une commande d'actionneur (41) en tant que composants du système d'automatisation (40) prévu pour apporter une solution à la tâche de déplacement est réalisé au moyen d'un algorithme de paramétrage, qui est associé à la base de données de paramétrage (30).
